# EUROPEAN PATENT APPLICATION

(11) **EP 2 821 723 A1**
(43) Date of publication of application: **07.01.2015**
(21) Application number: 14174631.3
(22) Date of filing: 27.06.2014
(51) Int. Cl.: F24F 7/02, A01K 1/00, A62C 2/12, E05F 1/00, E04D 13/03, F24F 11/04

(54) **Smoke hatch cover smoke from a building**

(30) Priority: 28.06.2013 FI 20135717
(71) Applicant: Multi Cap Tech Oy, 44500 Viitasaari (FI)
(72) Inventor: Tuohimetsä, Tero, 44500 VIITASAARI (FI)
(74) Representative: Helke, Kimmo Kalervo

(57) **Abstract**

The invention relates to an arrangement for venting smoke from a building, which arrangement (10) includes
- a duct (12), open at two ends (16), forming a flow channel for venting smoke from a building (100),
- a cover (14) for covering partly one open end (16) of the duct (12), pivoted on the open end (16) of the duct (12),
- opening means (20) for opening the said cover (14), and
- closing means (25) for closing the cover, which closing means (25) include a heat-controlled release element (22) for releasing the closing means (25) at a selected temperature,
- an air-conditioning control element(26) fitted to the duct (12), in order to regulate the size of the flow channel.

The control element (26) is inside the duct (12) before the said cover (14) and the arrangement includes release means for rotating the control element (26) to the open position in synchronization with the opening of the said cover (14).

## Description

The invention relates to an arrangement for venting smoke from a building, which arrangement includes
- a duct, open at two ends, forming a flow channel for venting smoke from a building,
- a cover for covering partly one open end of the duct, pivoted on the open end of the duct,
- opening means for opening the cover, and
- closing means for closing the cover, which closing means include a thermally-controlled release element for releasing the closing means at a selected temperature,
- an air-conditioning control element fitted to the duct, in order to regulate the size of the flow channel.

In case of fires, large building should have smoke-venting hatches, through which combustion gases formed from burning materials can be vented from the building in order to facilitate saving people and the operations of rescue-service personnel. The venting of combustion gases improves visibility inside the building and slows the ignition of the building's materials.

From the prior art, publication US 3,738,253 A, is known, which discloses one arrangement for venting smoke from a building, and which includes a duct, a cover that can be opened with the aid of an operating device, and cover closing means. The closing means are intended to keep the cover closed until, due to a fire, the opening means, for example a spring, open the cover. In this arrangement, air-conditioning control elements are also arranged in connection with the duct, with the aid of which ventilation implemented through the duct is regulated.

From the prior art, publication GB 1,029,830 is also known, which discloses one arrangement for venting smoke. However, a drawback of the solutions of the prior art is that the effective venting area of the smoke-venting hatches is small. Another drawback is the complex implementation of the air-conditioning control elements and the duct, which increases the manufacturing costs of the arrangement.

The invention is intended to create a simpler arrangement than the arrangements according to the prior art for venting smoke from a building, with the aid of which arrangement the effective venting area for smoke removal is made as large as possible. The characteristic features of the present invention are stated in the accompanying Claim 1.

This intention can be achieved by means of an arrangement for venting smoke from a building, which arrangement includes a duct, open at two ends, for forming a flow channel for venting smoke from a building, a cover, for covering partly one open end of the duct, pivoted to the open end of the duct, and opening means for opening the cover. In addition, the arrangement includes closing means for closing the cover, which closing means include a thermally-controlled release element for releasing the closing means at a selected temperature, and an air-conditioning control element fitted to the duct for regulating the size of the flow channel. The control element is inside the duct before the cover and the arrangement includes release means for turning the control element to the open position in synchronization with the opening of the cover. By such a construction, it is possible to take care of both the tasks of an air-conditioning exhaust duct and, if necessary the tasks of a smoke-venting hatch, in a combined manner and simply. The construction is cheap to implement and by means of it a large effective venting area for combustion gases is achieved. The synchronized opening cover and air-conditioning control element permit rapid smoke venting using a simple duct. In this connection, the term smoke-venting hatch refers to a combination of duct and cover, through which combustion gases are vented from a building. In other words, the air-conditioning control element and the cover are consecutive in the duct.

According to one embodiment, the duct is an essentially straight and unified channel. This is very cheap to implement in terms of investment costs.

Preferably in the duct both the air-conditioning flows and the combustion gases are arranged to travel over the same route and to exit from the open end of the duct. Thus the construction of the duct is simple.

The open end of the duct is preferably essentially parallel to the closed cover. Thus, the cover can be used to cover the open end of the duct.

In the closed position, the cover is preferably essentially transverse relative to the longitudinal direction of the duct. Thus it prevents water entering the building through the smoke-venting hatch.

The cover can be fitted at a distance from the open end of the duct, above the duct. This allows the air-conditioning air flows to be led along the duct and straight out without opening the cover.

The cover is preferably a unified piece. The unified cover meets the conditions required for a smoke-venting hatch in cases of fire and using it achieves a large effective venting area.

The control element can be a single planar piece. A single piece is cheap to manufacture and requires only a single pivot.

The surface area of the control element is preferably essentially the same as the cross-sectional surface area of the duct. Thus, with the aid of an air-conditioning control element, the operation of the air conditioning can be regulated even by closing the air flow entirely in the duct.

The air-conditioning control element is preferably arranged to limit the free surface area of the cross-section of the duct, when it is wished to limit the air-conditioning air flow in the duct. This permits extensive regulation of the air-conditioning air flow, from the closed position to the fully open position.

The control element is preferably arranged, with the aid of release means, to rotate parallel to the longitudinal direction of the duct in case of a fire. Thus, the open surface area of the cross-section of the duct at the control element increases to its maximum, boosting smoke venting.

The arrangement preferably includes at least two ducts, the air-conditioning control elements inside which are arranged to be controlled using the same control means. Thus, the air-conditioning control elements can be controlled centrally without separate controls for each duct.

According to one embodiment, the release means for opening the control element are arranged to release an individual control element from the control means when the release element opens the closing means. The combustion gases in the building are then guided out of the building through the opened smoke-venting hatch.

According to a second embodiment, the release means for releasing the control element are arranged to release all the duct's control elements from the control means. In this way, the combustion gases will heat the thermal fuses of the still closed ducts, accelerating the breaking of the thermal fuses, and through that the opening of the covers of the ducts.

According to one embodiment, the release means for opening the control element are a control cable, to which a thermal fuse is attached. When the thermal fuse breaks, the control element, which is freely pivoted to the duct, can rotate by gravity to its open position, without being affected by the air-conditioning control.

The opening means are preferably a gas spring. A gas spring is a cheap component and retains its operability well, even in a fire.

The release element is preferably a thermal fuse. A thermal fuse is a cheap and reliable component.

The release element can be a thermal fuse, which is arranged to break at a temperature of 60 - 100 °C, preferably at a temperature of 70 - 80 °C. Thus, the thermal fuse releases the closing means and the cover can open before the temperature inside the building rises excessively.

In this connection, the term air-conditioning control element refers to a control element, preferably a control plate, control damper, or similar planar control element, by means of which the duct can be partly or entirely covered when the control element is closed and, in turn, open most of the duct when the control element is in the open position. In other words, the air-conditioning control element is arranged to regulate the size of the flow channel.

The control element is preferably plate-like. A plate-like control element can have a linear guillotine-type construction or a pivoted construction according to the figures of the present application.

In the arrangement, preferably both the air-conditioning air flows and the smoke to be vented are arranged to be guided in from one open end of the duct and out from the open end on the side next to the cover. There will then be no need to arrange a separate flow route for the air-conditioning flow.

The air-conditioning control element can be a control damper. Such a plate-like control element is both cheap to implement and a reliable solution.

The air-conditioning control element can be pivoted to the duct. A pivoted construction is simple to implement.

By means of the arrangement according to the invention considerable cost savings are achieved in the form of reduced investment costs, as the air-conditioning ducts can be combined to form part of the smoke-venting hatches, so that the total number of ducts can be reduced considerably. In turn, this reduces the amount of installation work and the need for maintenance. In the arrangement according to the invention, the same duct acts as both an air-conditioning duct and a smoke-venting duct.

In the following, the invention is described in detail with reference to the accompanying drawings depicting some embodiments of the invention, in which
- Figure 1: shows a schematic diagram as a side view of the arrangement according to the invention, when the duct cover is closed,
- Figure 2: shows a schematic diagram as a side view of the arrangement according to the invention, when the duct cover is open,
- Figure 3: shows a top view of the arrangement according to the invention,
- Figure 4: shows the arrangement according to the invention as part of a building, when the covers are closed,
- Figure 5: shows the arrangement according to the invention as part of a building, when one cover is opened.

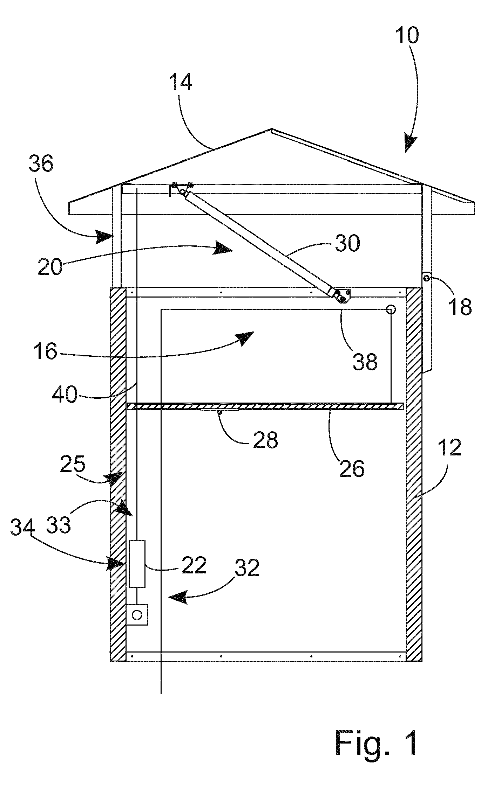

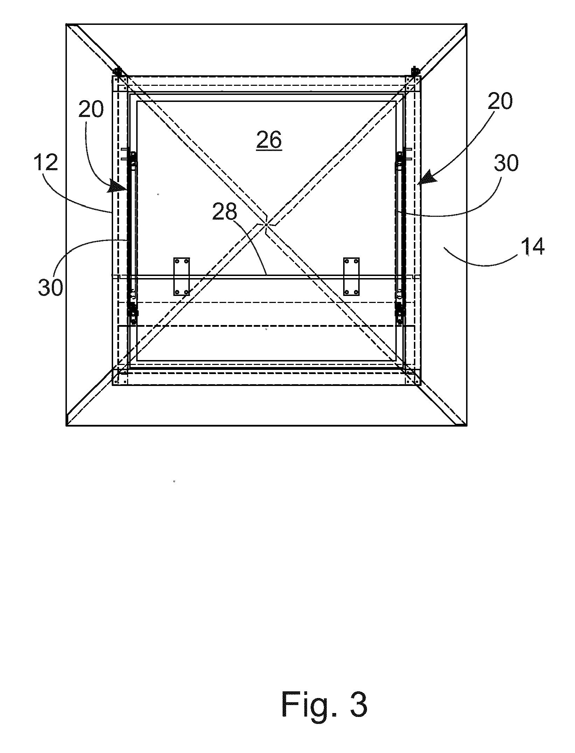

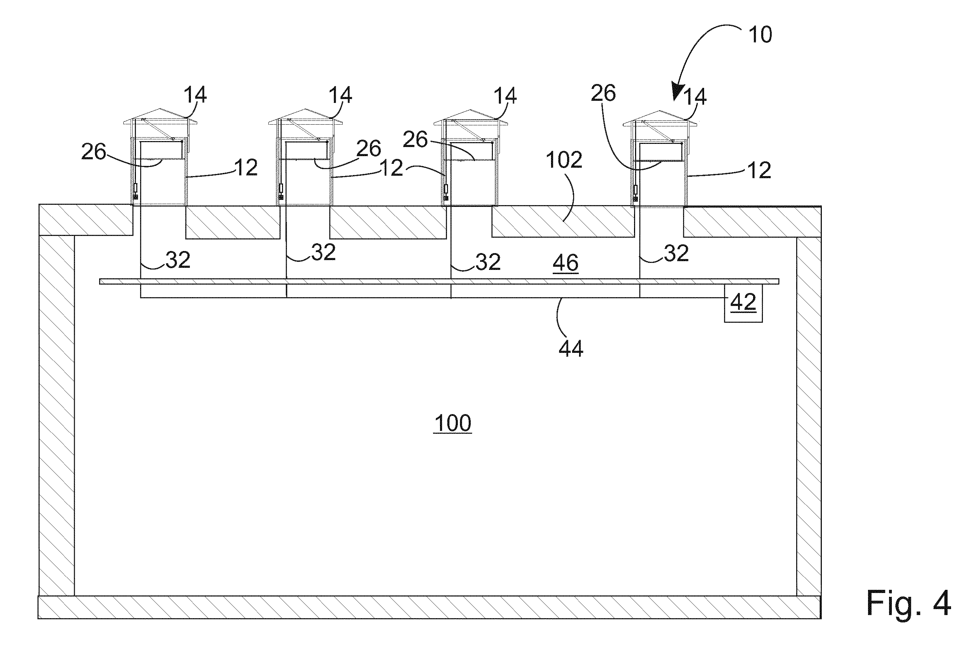

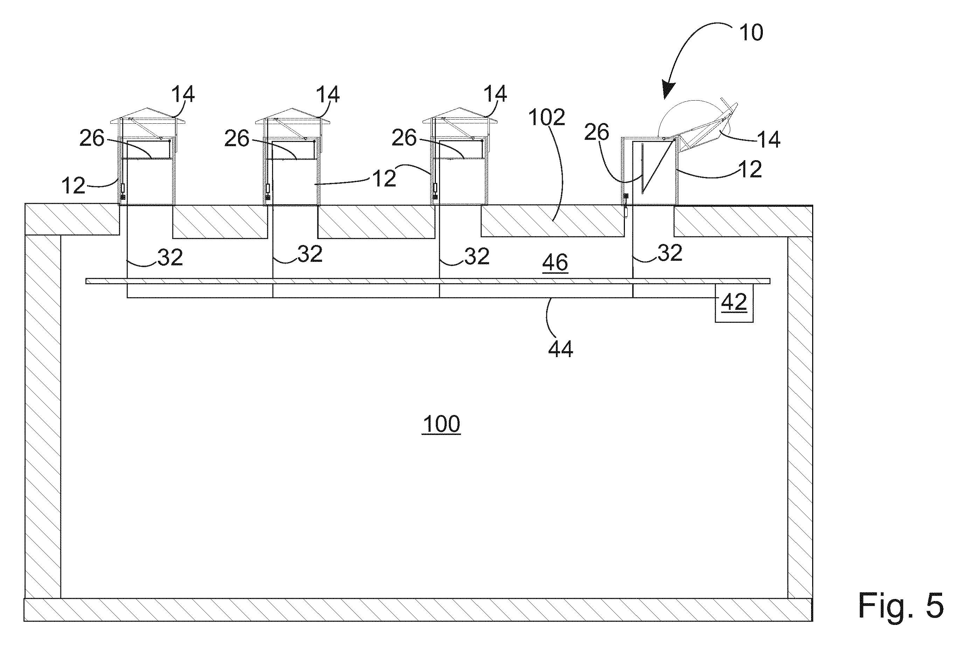

Figure 1 shows one preferred embodiment of the arrangement 10 according to the invention. Figure 1 shows only one duct 12, but it should be understood that generally in the arrangement according to the invention there are several ducts attached to the roof or sides of a building. In this connection, the building and the totality are shown more clearly in Figures 4 and 5. The arrangement according to Figure 1 includes a duct 12, which is attached according to Figures 4 and 5 to the roof 102 of a building 100. The duct 12 can be, for example, a duct according to the prior art, penetrating the roof 102 and assembled from 50-mm thick units, the cross-section of which can be a circle, a square, or some other shape suitable for the purpose. The duct shown in Figure 1 has a cross-section that is a square or rectangle. The cross-section of the duct can be seen more clearly in Figure 3. According to Figures 4 and 5, the duct 12 forms a connection with the roof 102 of the building, which penetrates the roof 102. The duct 12 is open at both ends 16, i.e. it includes two open sides, from which air-conditioning air and possible combustion gases exit the building. The duct is preferably otherwise closed, so that air can only travel through the duct from its two ends.

According to Figure 1, a cover 14, which protects the duct 12 from rain and other rubbish that would otherwise enter the duct 12, is pivoted to one open end 16 of the duct 12. In the arrangement according to the invention, when the cover 14 is closed, an open gap 36 remains between the closed cover 12 and the open end 16 of the duct 12, from which air-conditioning exhaust air coming from inside the building can exit the duct 12 even when the cover 14 is closed. In other words, the cover 14 covers the open end 16 of the duct 12, being above it at the distance of the gap 36, the open end 16 being perpendicular to the duct's cross-section. Preferably the cover 14 is pivoted with the aid of a hinge 18 at one side of the open end 16 of the duct 12. Opening means 20, the task of which is to rotate the cover 14 around the hinge 18 thus opening the cover 14 to its open position, are fitted between the duct 12 and the cover 14. The opening means 20 can be, for example, a gas spring 30 according to the figure. Further, in the arrangement according to the invention according to Figure 1, an air-conditioning control element 26, i.e. in this case a control damper is installed inside duct 12. The control element 26 can also be pivoted by a pivot 28 to the duct 12, so that the control element 26 can be rotated, if necessary, to different positions, when the desired portion of the surface area of the cross-section of the duct 12 will remain open. In other words, the control element is arranged to limit the surface area that remains open in the duct's cross-section.

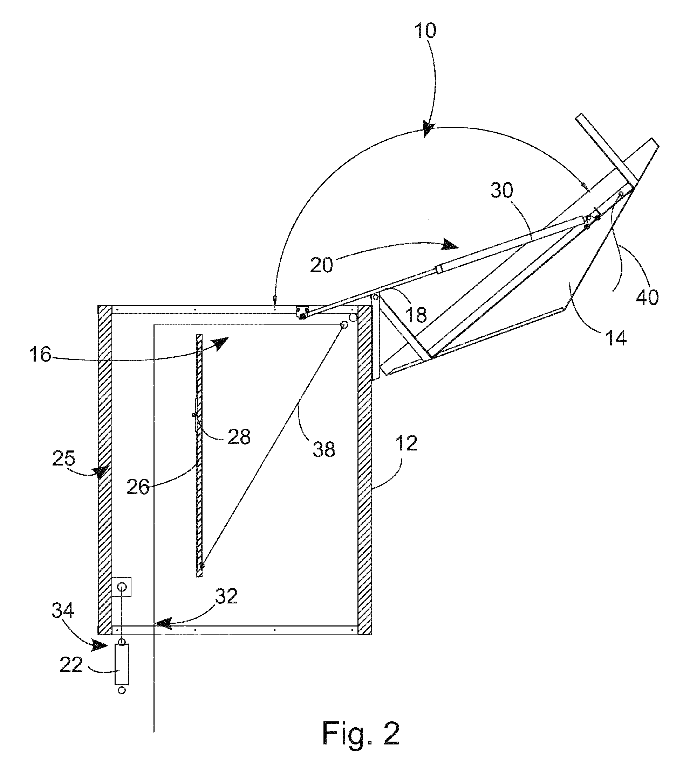

The arrangement further includes closing means 25, by which the opening of the cover 14 is prevented in a normal situation, when there is not a fire inside the building. The closing means 25 include a thermally-controlled release element 22, preferably a thermal fuse 34, which is intended to break at its specific temperature in the case of a fire. In the preferred embodiment according to Figures 1 and 2, the closing means 25 include a cable 40, which is attached to the cover 14, and a thermally-controlled release element 22, preferably a thermal fuse 34, set between the cable 40. In a normal situation, by means of the thermal fuse 34, the tension in the cable 40 holds the cover 14 in the closed position according to Figure 1. In other words, in the closed position a force is transmitted through the thermal fuse 34 to the cover 14, which causes a larger closing moment around the cover's 14 hinge 18 than that of the opening means 20 seeking to open the cover 14 around the hinge 18.

In the arrangement, there are release means (not shown in the figure) for the air-conditioning control element 26, by means of which the control element 26 can, in case of fire, be opened in synchronization with the cover 14. In the embodiment of Figures 1 and 2, the control means 33 of the control element 26 is a control cable 38, which is attached at one end to the control element 26 and at the other end, according to Figures 4 and 5, to the air-conditioning control connection cable 44. Thus, both the cover 14 closing means 25 and the air-conditioning control-element control means 33 are preferably independent of each other. When the cover 14 is closed, the tension in the connection cable 44 goes from the control cable 38 to the control element 26, which it attempts to rotate to the closed position, i.e. parallel to the plane of the cross-section of the duct 12. The control element 26 is preferably pivoted eccentrically with the aid of pivot 28, so that when the thermal fuse 34 and the release means release the control element 26 from controlling the air-conditioning, the control element 26 rotates by gravity to the duct's longitudinal direction, i.e. to the vertical direction. Differing from the figure, the pivot 28 can also be in the edge of the duct.

According to one embodiment, the control element can have its own thermal fuse, so that the control of the control element will not affect the opening of the cover 14. What is important is that, in any event, when the cover 14 opens when combustion gases break the thermal fuse, the air-conditioning control element 26 is also synchronized to rotate to its open positon, i.e. in the direction of the longitudinal direction of the duct 12, so that the combustion gases can exit the building through the duct. In other words, when the cover opens, the control element should be released from the air-conditioning control system with the aid of the release means. The release means can be, for example, mechanical means, which open the control element's connection to the air-conditioning control system.

According to Figure 2, when the thermal fuse 34 breaks, the closing means 25 of the cover 14 open, i.e. the tension in the cable 40 going to the cover 14 is released and only the force of the opening means 20 seeks to rotate the cover 14 around the hinge 18. The opening means 20 push the cover 14 to the opened position, in which the cover 14 is preferably rotated through at least 90° relative to its closed position. In the closed position, the cover 14 is essentially transverse relative to the longitudinal axis of the duct 12. When the cover 14 opens, the combustion gases can exit unimpededly to the air from the open end 16 of the duct 12. Each duct 12 preferably has its own thermal fuse 34, so that the ducts' 12 covers open one at a time when the temperature at the thermal fuse rises sufficiently to break the thermal fuse, according to Figure 5. When the cover 14 opens, the release means of the air-conditioning control element 26 is also arranged to release the control element 26 from the air-conditioning control system. The control element is then able to open by rotating to the longitudinal direction of the duct 12. According to one embodiment, the release means for opening each control element 26 are specific to each control element, i.e. although the control elements 26 would be in series in the case of control, an individual control element can be detached from the common control in order to open the control element 26.

In this connection, though a thermal fuse is preferably used as an example, when referring to a thermally-controlled release element 22, it should, however, be understood that the invention can also be applied in such a way that the release element 22 is some other operating device, which releases the connection between the closing means and the cover when a specific temperature is exceeded. One alternative could be, for example, a thermal relay, which controls an electrical lock between the closing means and the cover. Alternatively, the release element 22 could be an electromagnet, the power to which is cut on the basis of a measurement of a temperature sensor.

According to one embodiment, a gearwheel, which rotates at the same time as the cover rotates around the hinge, can be fitted in connection with the hinge. Correspondingly, in connection with the pivot of the control element, a corresponding gearwheel, which is permanently connected to the shaft of the pivot, can be fitted. There can be a chain transmission between both the gearwheel of the hinge of the cover and the gearwheel of the pivot of the control element, with the aid of which the rotation of the cover is transferred in a synchronized manner as a movement of the control element. In this case, the movement of the control element can be directed to lessen the tension in the control element's control cable, so that the control element can rotate around the pivot.

In Figures 1 - 5, the control elements are shown as being one element in each duct, but it should be understood that the control element can also be implemented in several parts, by means of various pivoting or entirely different opening and closing mechanisms, as long as the opening of the control element is synchronized with the cover. In this connection, the term synchronized opening means that the control element opens essentially simultaneously with the cover when the thermal fuse is broken.

The arrangement according to the invention can be used advantageously in connection with various agricultural buildings, such as, for example, in cowsheds. The arrangement according to the invention is suitable for use in any space whatever, in which the operation of the air conditioning is controlled using a control element limiting the cross-sectional area of the duct, and in which a smoke-venting duct is a statutorily prescribed part of a building.

The thermal fuse used in the arrangement according to the invention can be a thermal fuse according to the prior art, which, however, under its specific temperature can lock the parts of the thermal fuse so that the tension in the cover's closing means runs through the thermal fuse. The thermal fuse can be chosen to break at a temperature of 60 - 100 °C, preferably at a temperature of 70 - 80 °C.

In the arrangement, the cover's opening means can preferably be a gas spring, but, for example, a spring or other similar mechanism, which opens the cover immediately the closing means open, can also be the opening means. According to one embodiment, the opening means can be, for example, a weight suspended on a hoist, which pulls the cover open.

The release means of the control element 26 according to Figures 1 and 2 can be the operating device 42 shown in Figures 4 and 5, which operates the control elements 26 centrally by means of the cable 32 shown in Figures 1 and 2. The cable 32 of each control element 26 can be attached to a common cable 44, with which an operating device 42, for example an electric motor, operates the control elements. The ducts 12 can be connected to a common air-conditioning duct 46.

According to one embodiment, in the arrangement in connection with one duct there can be a cover with two or more parts, each part being separately pivoted to the edges of the duct.

## Claims

1. Arrangement for venting smoke from a building, which arrangement (10) includes
- a duct (12), open at two ends (16), forming a flow channel for venting smoke from a building (100),
- a cover (14) for covering partly one open end (16) of the duct (12), pivoted on the open end (16) of the duct (12),
- opening means (20) for opening the said cover (14), and
- closing means (25) for closing the cover, which closing means (25) include a heat-controlled release element (22) for releasing the closing means (25) at a selected temperature,
- an air-conditioning control element (26) fitted to the duct (12), in order to regulate the size of the flow channel,
**characterized in that** the said control element (26) is inside the duct (12) before the said cover (14) and the arrangement includes release means for rotating the control element (26) to the open position in synchronization with the opening of the said cover (14).

2. Arrangement according to Claim 1, **characterized in that**, in the said duct (12) both the air-conditioning flows and the combustion gases are arranged to travel over the same route and to exit from the open end (16) of the duct (12).

3. Arrangement according to Claim 1 or 2, **characterized in that** in the closed position the said cover (14) is essentially transverse relative to the longitudinal direction of the duct (12).

4. Arrangement according to any of Claims 1 - 3, **characterized in that** the cover (14) is arranged at a distance from the open end (16) of the duct above the duct (12).

5. Arrangement according to any of Claims 1 - 4, **characterized in that** the cover (14) is a unified piece.

6. Arrangement according to any of Claims 1 - 5, **characterized in that** the control element (26) is a single planar piece.

7. Arrangement according to any of Claims 1 - 6, **characterized in that** the surface area of the control element (26) is essentially the same as the cross-sectional surface area of the duct (12).

8. Arrangement according to any of Claims 1 - 7, **characterized in that** the said air-conditioning control element (26) and the cover (14) are in the duct (12) consecutively.

9. Arrangement according to any of Claims 1 - 8, **characterized in that** the arrangement (10) includes at least two ducts (12), the air-conditioning control elements (26) inside which are arranged to be controlled using the same control means (33) belonging to the air conditioning.

10. Arrangement according to Claim 9, **characterized in that** the said release means for opening the control element (26) are arranged to release an individual control element (26) from the control means (33) when the release element (22) opens the closing means (25).

11. Arrangement according to Claim 9, **characterized in that** the said release means for opening the control element (26) are arranged to release the control elements (26) of all the ducts (12) from the control means (33).

12. Arrangement according to any of Claims 1 - 11, **characterized in that** the said release element (22) is a thermal fuse (34), which thermal fuse (34) is arranged to break at a temperature of 60 - 100 °C, preferably at a temperature of 70 - 80 °C.

13. Arrangement according to any of Claims 1 - 12, **characterized in that** in the arrangement both the air-conditioning air flows and the smoke to be vented are arranged to be guided in from one open end (16) of the duct (12) and out from the open end (16) on the side next to the cover (14).

14. Arrangement according to any of Claims 1 - 13, **characterized in that** the said air-conditioning control element (26) is a control damper.

15. Arrangement according to any of Claims 1 - 14, **characterized in that** the said air-conditioning control element (26) is pivoted to the said duct (12).
